# EUROPEAN PATENT SPECIFICATION

(11) **EP 2 527 181 B1**
(45) Date of publication and mention of the grant of the patent: **14.05.2014**
(21) Application number: 12164257.3
(22) Date of filing: 16.04.2012
(51) Int. Cl.: F16H 61/4139, B60K 17/356, F16H 47/02, B60K 17/10

(54) **Hydrostatic stepless transmission**
Stufenloses hydrostatisches Getriebe
Transmission à variation continue hydrostatique

(30) Priority: 26.05.2011 JP 2011118182; 21.02.2012 JP 2012035315
(43) Date of publication of application: 28.11.2012
(73) Proprietor: KANZAKI KOKYUKOKI MFG. CO., LTD., Hyogo 661-0981 (JP)
(72) Inventor: Kamikawa, Nobuhisa c/o Kanzaki Kokyukoki Mfg. Co., Ltd., Amagasaki-shi, Hyogo 661-0981 (JP)
(74) Representative: Jostarndt, Hans-Dieter

(56) References cited:
- EP-A1- 2 088 023
- EP-A2- 1 571 371
- JP-A- 2005 132 212
- US-A- 6 109 031

## Description

### BACKGROUND OF THE INVENTION

### Field of the Invention

The present invention relates to a hydrostatic stepless transmission (hereinafter, "HST") including a port block defining a hydraulic circuit fluidly connecting a hydraulic pump to a hydraulic motor, wherein the hydraulic pump and motor are mounted on a side surface of the port block, and a charge pump for supplying fluid to the hydraulic circuit is mounted on another side surface of the port block. Especially, the present invention relates to a structure of the HST available to be attached to a transmission housing incorporating a transmission mechanism drivingly connected to the HST.

### Related Art

As disclosed by JP 2005-132212 A, there is a well-known transmission provided with an HST including a hydraulic pump, a hydraulic motor, and a port block. The hydraulic pump and motor are mounted on a first side surface of the port block so as to be fluidly connected to each other via the hydraulic circuit formed in the port block. An HST housing is attached to the first side surface of the port block so as to enclose the hydraulic pump and motor mounted on the first side surface.

The transmission includes a transmission housing supporting an axle and incorporating transmission gears for transmitting power outputted from a motor shaft of the hydraulic motor to the axle. In this regard, the transmission housing is disposed opposite the hydraulic pump and motor and the HST housing with respect to the port block and is attached to a second side surface of the port block opposite to the first side surface, so as to drivingly connect the transmission gears to the motor shaft projecting outward from the second side surface of the port block.

This HST joined to the transmission housing includes a charge pump for supplying fluid to the hydraulic circuit in the port block. A pump shaft of the hydraulic pump also serves as a drive shaft of the charge pump. In this regard, the charge pump includes a pump housing incorporating a rotor (e.g., inner and outer rotors of a trochoidal pump) drivingly connected to the pump shaft. Therefore, the charge pump is disposed opposite to the hydraulic pump and motor with respect to the port block, the pump shaft is passed through the port block and projects outward from the second side surface of the port block, and the pump housing of the charge pump is joined to the second side surface of the port block, so that the rotor of the charge pump is drivingly connected to the pump shaft projecting outward from the second side surface of the port block, and so that the port block and the pump housing joined to each other in this way define a short charge circuit supplying fluid delivered from the rotor of the charge pump to the hydraulic circuit in the port block fluidly connecting the hydraulic pump and motor to each other.

In this way, the transmission housing and the pump housing are mounted to the second side surface of the port block. However, this arrangement causes a problem that the transmission housing must have a complicated shape, such as a step or a recess, to avoid interfering with the charge pump. This shape of the transmission housing reduces a size of a portion of the transmission housing mounted to the port block, thereby limiting design variation of the transmission mechanism in the transmission housing, and thereby reducing the rigidity of the transmission housing joined to the HST.

### BRIEF SUMMARY OF THE INVENTION

An object of the invention is to provide an HST configured so that a transmission housing can be attached to the HST so as to drivingly connect a transmission mechanism therein to the HST without an undesirable small size of a portion joined to the HST to avoid interference with a charge pump of the HST.

To achieve this object, an HST joined to a transmission housing includes a hydraulic pump, a hydraulic motor, a port block, and a charge pump. The port block includes first and second side surfaces opposite each other. The hydraulic pump and motor are mounted on the first side surface of the port block so as to be fluidly connected to each other via a hydraulic circuit formed in the port block. The charge pump includes a pump housing mounted to the second side surface of the port block. The pump housing includes a mount part to which the transmission housing is mounted.

Therefore, the transmission housing is mounted to the port block via the pump housing of the charge pump. The transmission housing is simplified because it does not have to be shaped to avoid interference with the charge pump. This is advantageous to increase an area of the transmission housing contacting the port block, thereby enhancing design variation of a transmission mechanism in the transmission housing, and thereby increasing a rigidity of the transmission housing joined to the HST.

Preferably, the hydraulic pump has a pump shaft projecting outward from the second side surface of the port block. The hydraulic motor has a motor shaft projecting outward from the second side surface of the port block. The pump housing includes respective shaft holes through which the pump shaft and the motor shaft projecting outward from the second side surface of the port block are passed. The pump housing has an area contacting the second side surface of the port block so as to define the mount part. The shaft holes are disposed in the area.

Therefore, the mount part defined by the area of the pump housing in which the shaft holes are disposed can have a large area so as to expand a portion of the transmission housing mounted onto the mount part of the pump housing, thereby further increasing the rigidity of the transmission housing, and reducing vibration and noise of the transmission housing. Further, the transmission housing can incorporate both a transmission mechanism drivingly connected to the pump shaft and a transmission mechanism drivingly connected to the motor shaft, thereby enhancing the design variation of the transmission mechanism in the transmission housing. For example, the transmission housing can incorporate a PTO transmission mechanism drivingly connected to the pump shaft as well as a sub speed-changing transmission mechanism drivingly connected to the motor shaft.

Preferably, the pump housing has an outlet port for discharging fluid delivered from the charge pump to outside of the pump housing, and an inlet port for introducing fluid from outside of the pump housing to the hydraulic circuit in the port block.

Therefore, the charge pump can also serve as a hydraulic pressure source for supplying fluid to a hydraulic equipment disposed outside of the pump housing separately from the HST. Further, if the pump housing has the aforesaid area in which the shaft holes are disposed, the pump housing can have a sufficiently large portion for providing the outlet and inlet ports.

These, further and other objects, features and advantages of the invention will appear more fully from the following description with reference to drawings.

### BRIEF DESCRIPTION OF THE DRAWINGS

Fig. 1 is a hydraulic circuit diagram of a hydraulic four-wheel driving vehicle 1equipped with an HST 2.

Fig. 2 is a sectional side view of HST 2.

Fig. 3 is a sectional side view of HST 2.

Fig. 4 is a rear view of HST 2.

Fig. 5 is a cross sectional view of HST 2 taken along A-A line of Fig. 3.

Fig. 6 is a front view of a pump housing 61 of a charge pump 12.

Fig. 7 is a front view of a pump valve plate 57 and a motor valve plate 58, attached on a port block 48.

Fig. 8 is a perspective view of pump valve plate 57.

Fig. 9(a) is a front view of pump valve plate 57 disposed to correspond to a rotational direction of a hydraulic pump P.

Fig. 9(b) is a front view of pump valve plate 57 disposed to correspond to another opposite rotational direction of hydraulic pump P.

Fig. 10 is a perspective view of a pump valve plate 77.

Fig. 11 is a hydraulic circuit diagram of a hydraulic four-wheel driving vehicle 1A equipped with an HST 2A.

Fig. 12 is a sectional side view of HST 2A.

Fig. 13 is a cross sectional view of HST 2A taken along B-B line of Fig. 12.

### DETAILED DESCRIPTION OF THE INVENTION

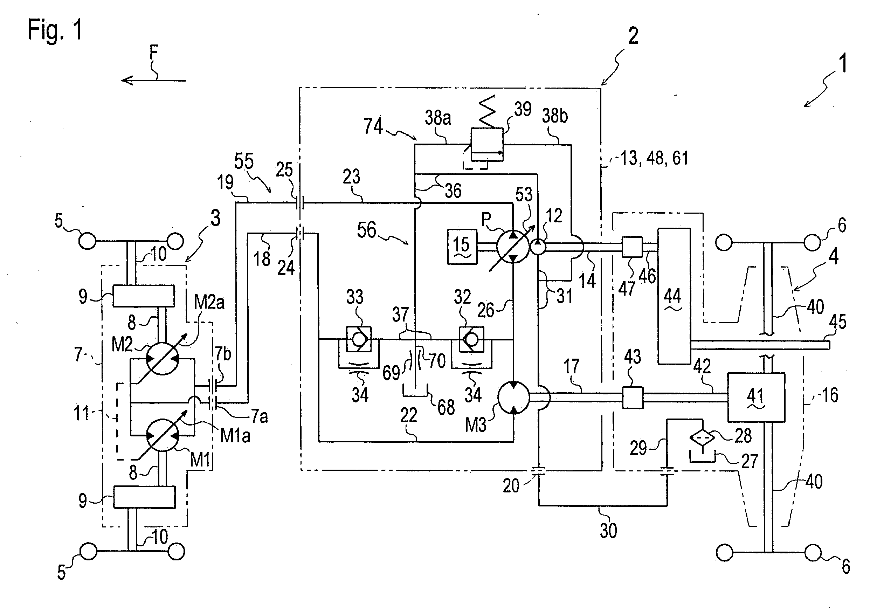

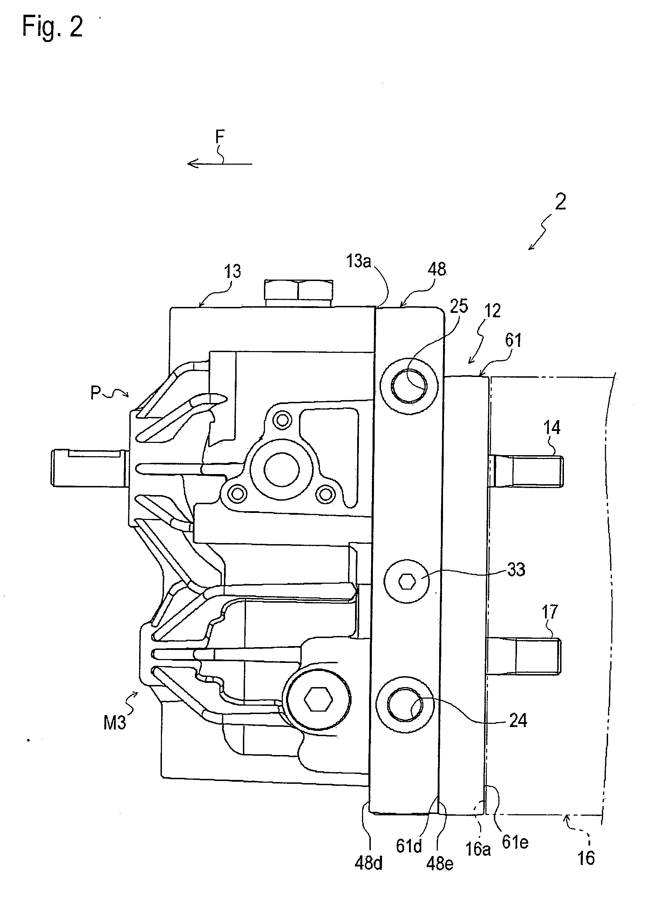

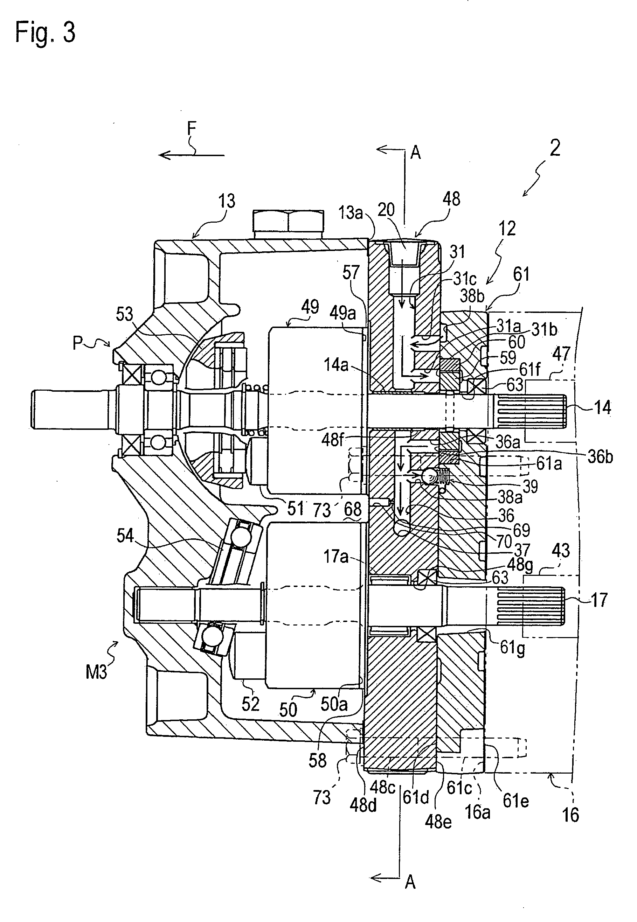

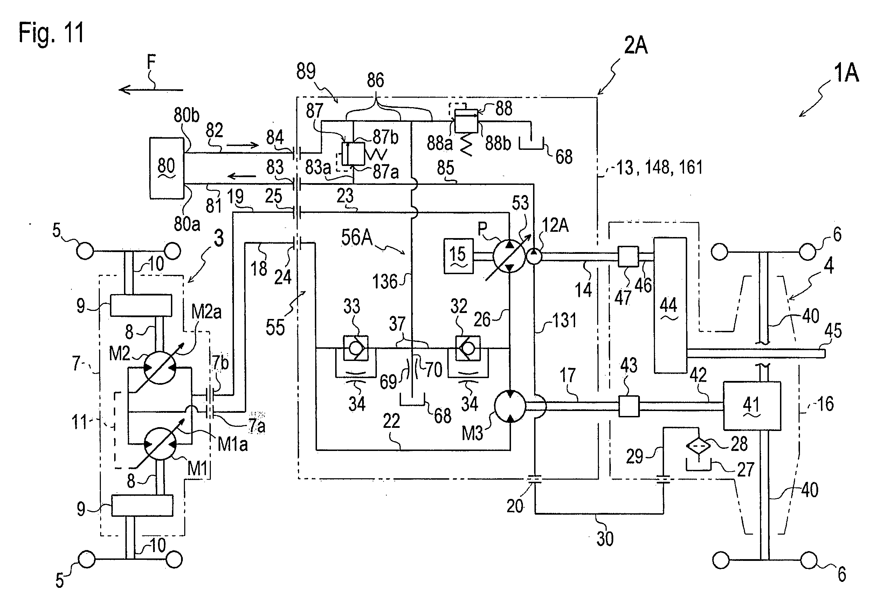

A hydraulic four-wheel driving vehicle 1 equipped with an HST 2 will be described with reference to Fig. 1. Referring to Fig. 1 (and later-discussed Figs. 2 and 3), it is assumed that an arrow F indicates a forward direction of vehicle 1. Hereinafter, description of portions and members in vehicle 1 will be based on this assumption. Further, this is adapted to description of an alternative vehicle 1A and an alternative HST 2A with reference to Figs. 11 to 13.

Vehicle 1 is equipped with a front transaxle 3 carrying left and right front wheels 5, a rear transaxle 4 carrying left and right rear wheels 6, and HST 2 interposed between front and rear transaxles 3 and 4.

Front transaxle 3 includes a transaxle housing 7 that incorporates left and right variable displacement hydraulic motors M1 and M2. Hydraulic motors M1 and M2 are juxtaposed left and right so as to have respective left and right motor shafts 8 extended horizontally laterally of vehicle 1. Left and right front wheels 5 have respective axles 10 that are drivingly connected to respective left and right motor shafts 8 via respective steering gear units 9 including respective kingpins (not shown), so that left and right front wheels 5 serve as steerable wheels that can be steered for left and right turning of vehicle 1.

Hydraulic motors M1 and M2 have respective movable swash plates M1a and M2a. A linkage 11 operatively connects movable swash plates M1a and M2a to each other. Further, linkage 11 operatively connected to at least one of left and right front wheels 5 so as to change slanting angles of movable swash plates M1a and M2a according to change of turn angles of front wheels 5, thereby preventing front wheels 5 or rear wheels 6 from being dragged during turning of vehicle 1.

HST 2 includes a hydraulic pump P, a charge pump 12, and a hydraulic motor M3. In this regard, as later discussed, HST 2 includes a port block 48 and an HST housing 13 (see Fig. 2 and others). Hydraulic pump P, hydraulic motor M3 and charge pump 12 are mounted on port block 48. HST housing 13 is attached at an open rear end 13a thereof to port block 48 so as to enclose hydraulic pump P and motor M mounted on port block 48. Further, charge pump 12 includes a pump housing 61 defining an outer block of charge pump 12, and pump housing 61 is attached to port block 48 outside of HST housing 13. Therefore, HST housing 13, port block 48 and pump housing 61 defines an outer block of HST 2. This is the meaning of "13, 48, 61" in Fig. 1.

Hydraulic pump P includes a pump shaft 14 serving as an input shaft of hydraulic pump P. Pump shaft 14 is extended rearward so as to also serve as a drive shaft of charge pump 12. Pump shaft 14 is further extended rearward from charge pump 12, and is inserted into transaxle housing 16 of rear transaxle 4. Pump shaft 14 is extended forward to be drivingly connected to an engine 15 via an unshown transmission device, e.g., a propeller shaft and universal joints.

Hydraulic pump P includes a movable swash plate 53 operatively connected to a speed controlling manipulator, such as a pedal or a lever, so that the slant angle and direction of movable swash plate 53 are controlled by operating the speed controlling manipulator so as to define the fluid delivery amount and direction of hydraulic pump P, thereby controlling the rotational speed and direction of hydraulic motor M3 and the rotational speed and direction of hydraulic motors M1 and M2 in front transaxle 3.

HST 2 has ports 24 and 25. Port 24 is fluidly connected to one of suction and delivery ports of hydraulic motor M3 via a fluid passage 22. Port 25 is fluidly connected to one of suction and delivery ports of hydraulic pump P via a fluid passage 23. The other of the suction and delivery ports of hydraulic motor M3 is fluidly connected to the other of the suction and delivery ports of hydraulic pump P via a fluid passage 26. Fluid passages 18 and 19, made of pipes, for example, are fluidly connected at rear ends thereof to respective ports 24 and 25 of HST 2, and are fluidly connected at front end thereof to respective ports 7a and 7b provided on transaxle housing 7 of front transaxle 3, so as to be interposed between HST 2 and front transaxle 3.

Fluid passage 18 is fluidly connected via port 7a to one of kidney ports (not shown) of each of hydraulic motors M1 and M2, and fluid passage 19 is fluidly connected via port 7b to the other of the kidney ports of each of hydraulic motors M1 and M2, so as to constitute a hydraulic circuit in front transaxle 3 fluidly connecting hydraulic motors M1 and M2 in parallel to hydraulic pump P.

In this way, a hydraulic circuit 55 is configured so as to fluidly connect hydraulic motor M3 and the pair of hydraulic motors M1 and M2 in series to hydraulic pump P. For example, when the slant direction of movable swash plate 53 of hydraulic pump P is set for forward driving of vehicle 1, fluid delivered from hydraulic pump P is supplied to hydraulic motor M3 via fluid passage 26, then, is supplied to hydraulic motors M1 and M2 via fluid passages 22 and 18, and then, is returned to hydraulic pump P via fluid passages 19 and 23, thereby driving hydraulic motors M1, M2 and M3 for driving four wheels 5 and 6 of vehicle 1.

Transaxle housing 16 (serving as a transmission housing) of rear transaxle 4 defines a fluid sump 27 therein. Charge pump 12 sucks fluid from fluid sump 27 to its suction port via a filter 28, a fluid passage 29 in transaxle housing 16, a fluid passage 30 outside of transaxle housing 16 and HST 2, and a fluid passage 31 in HST 2. HST 2 has an outwardly open port 20 to which a pipe or the like serving as fluid passage 30 is connected at an end thereof so as to be fluidly connected to fluid passage 31 in HST 2. In HST 2, a charge circuit 56 is configured to supply fluid delivered from charge pump 12 to hydraulic circuit 55.

In charge circuit 56, a fluid passage 36 is extended from a delivery port of charge pump 12 and is joined to a fluid passage 37. Fluid passage 37 is interposed between charge check valves 32 and 33 so as to be fluidly connected at ends thereof to respective fluid passages 26 and 22 via respective charge check valves 32 and 33. When one of fluid passages 22 and 26 are pressurized higher than the other depending on whether movable swash plate 53 of hydraulic pump P is set for forward driving of vehicle 1 or backward driving of vehicle 1, charge check valve 32 or 33 fluidly connected to the other hydraulic depressed fluid passage 22 or 26 is opened to supply fluid from charge pump 12 to hydraulically depressed fluid passage 22 or 26, thereby supplementing fluid to hydraulic circuit 55. Charge check valves 32 and 33 are provided with respective orifices 34 bypassing respective charge check valves 32 and 33 so as to expand a neutral zone of hydraulic pump P.

A relief circuit 74 for regulating hydraulic pressure in fluid passages 36 and 37 is interposed between fluid passage 36 extended from the delivery port of charge pump 12 and fluid passage 31 fluidly connected to the suction port of charge pump 12. Relief circuit 74 includes fluid passages 38a and 38b and a relief valve 39. Relief valve 39 is fluidly connected to fluid passage 36 via fluid passage 38a, and is fluidly connected to fluid passage 31 via fluid passage 38b, thereby releasing excessive fluid from fluid passage 36 to fluid passage 31 upstream of charge pump 12.

Left and right rear wheels 6 have respective axles 40, and left and right axles 40 are differentially connected to each other via a differential unit 41 in transaxle housing 16 of rear transaxle 4. Differential unit 41 has an input shaft 42 extended forward in transaxle housing 16. On the other hand, hydraulic motor M3 includes a motor shaft 17 serving as an output shaft of HST 2. Motor shaft 17 is extended rearward into transaxle housing 16 so as to be drivingly connected at a rear end thereof to a front end of input shaft 42 of differential unit 41 via a coupling 43 in transaxle housing 16. Therefore, HST 2 has hydraulic pump P driven by engine 15, and has hydraulic motor M3 driving rear wheels 6 via differential unit 41.

A PTO shaft 45 is journalled in transaxle housing 16 and projects outward from transaxle housing 16, and a PTO transmission unit 44 for transmitting power to PTO shaft 45 is disposed in transaxle housing 16. PTO transmission unit 44 has an input shaft 46 extended forward in transaxle housing 16. As mentioned above, pump shaft 14 is extended rearward into transaxle housing 16, thereby being drivingly connected at a rear end thereof to a front end of input shaft 46 via a coupling 47 in transaxle housing 16. Therefore, power of engine 15 is transmitted to PTO shaft 45 via pump shaft 14 and PTO transmission unit 44.

HST 2 will be described in detail with reference to Figs. 1 to 5. Axial plunger-type hydraulic pump P and motor M3 are aligned vertically in HST housing 13, so that hydraulic motor M3 is disposed below hydraulic pump P. HST housing 13 has an open rear end 13a joined to a vertical plate-shaped port block 48.

As shown in Fig. 3, hydraulic pump P includes a pump cylinder block 49 fixed on pump shaft 14 having a fore-and-aft horizontal axis. Plungers 51 are fitted into respective plunger holes formed in pump cylinder block 49 so as to be reciprocally slidable in the axial direction of pump shaft 14. Hydraulic pump P includes movable swash plate 53 abutting against heads of plungers 51, whereby hydraulic pump P has a variable displacement.

As shown in Fig. 3, hydraulic motor M3 includes a motor cylinder block 50 fixed on motor shaft 17 having a fore-and-aft horizontal axis. Plungers 52 are fitted into respective plunger holes formed in motor cylinder block 50 so as to be reciprocally slidable in the axial direction of motor shaft 17. Hydraulic motor M3 includes a fixed swash plate 54 abutting against heads of plungers 52, whereby hydraulic motor M3 has a fixed displacement.

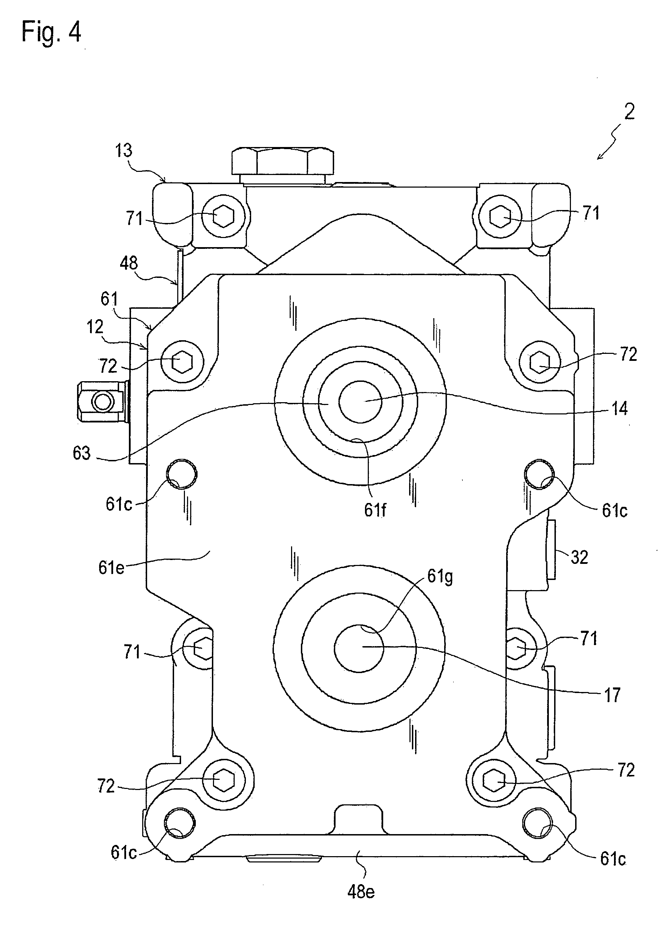

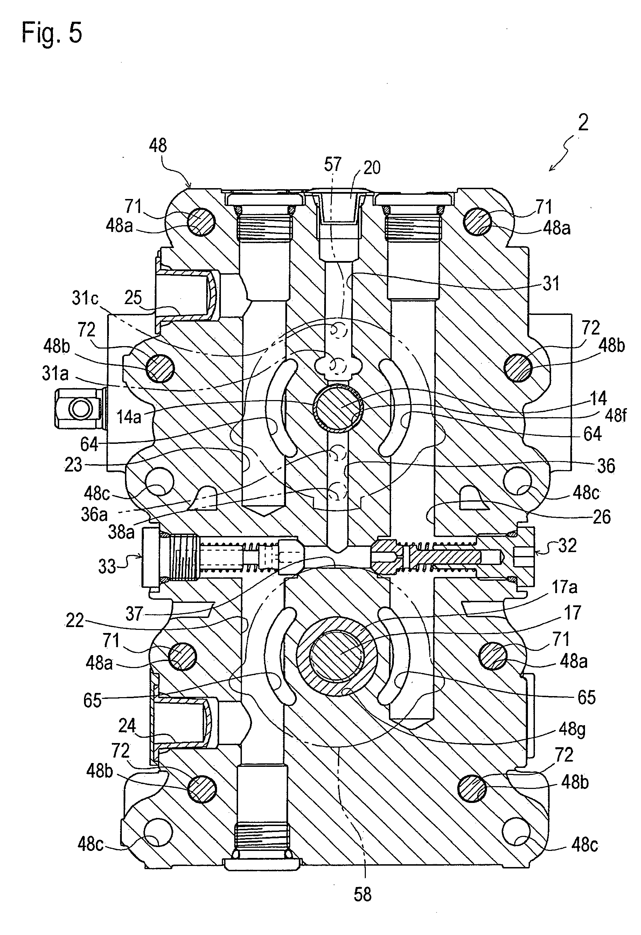

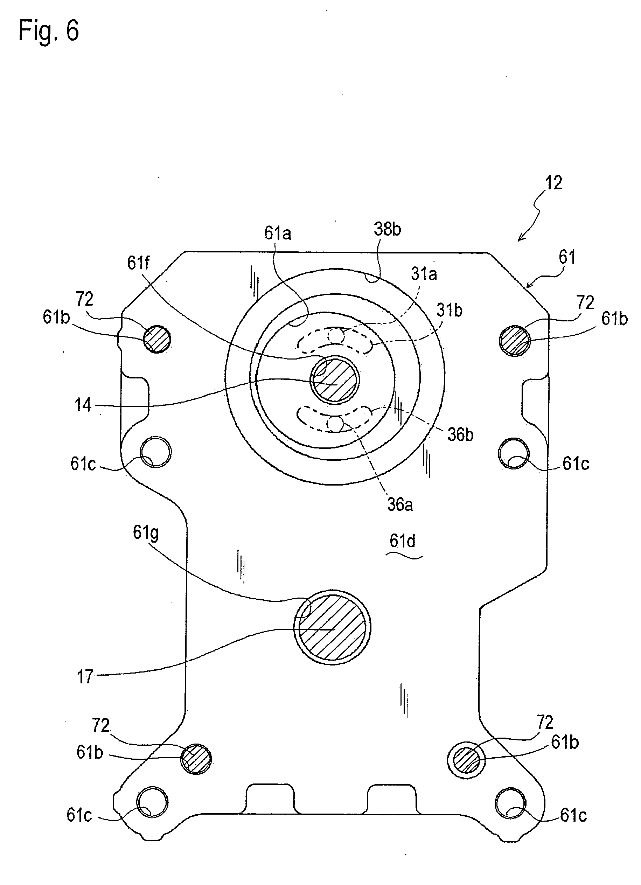

As shown in Figs. 2 and 3, port block 48 has a vertical front side surface 48d and a vertical rear side surface 48e. Open rear end 13a of HST housing 13 abuts against front side surface 48d of port block 48. In this regard, as shown in Figs. 3 and 5, port block 48 is formed therein with bolt holes 48a and 48b extended fore-and-aft horizontally so as to be open on front and rear side surfaces 48d and 48e. As shown in Figs. 4 and 5, bolts 71 are screwed forward into HST housing 13 via respective bolt holes 48a, thereby fastening port block 48 to HST housing 13. Bolt holes 48b shown in Fig. 5 coincide to later-discussed bolt holes 61b (see Fig. 6) in pump housing 61 of charge pump 12, and bolts 72 are screwed forward into HST housing 13 via respective bolt holes 48b and 61b, as shown in Figs. 4, 5 and 6, thereby fastening port block 48 to HST housing 13 together with pump housing 61.

As shown in Fig. 5, port block 48 is formed in a left half portion thereof between front and rear side surfaces 48d and 48e with vertical fluid passages 22 and 23, and is formed in a right half portion thereof between front and rear side surfaces 48d and 48e with vertical fluid passage 26. Lower vertical fluid passage 22 and upper vertical fluid passage 23 are extended coaxially to each other, however, a top end of lower vertical fluid passage 22 is separated from a bottom end of upper vertical fluid passage 23. Port 24 is extended leftward from lower vertical fluid passage 22 and is open on the left outer side of port block 48, as shown in Fig. 3. Port 25 is extended leftward from upper vertical fluid passage 23 and is open on the left outer side of port block 48 above port 24, as shown in Fig. 3. Alternatively, fluid passage 26 may be formed in the left half portion of port block 48, fluid passages 22 and 23 may be formed in the right half portion of port block 48, and ports 24 and 25 may be provided on a right outer side of port block 48.

As shown in Figs. 3 and 5, fluid passage 37 is formed in port block 48 so as to extend horizontally laterally from a top portion of fluid passage 22 to a vertical intermediate portion of fluid passage 26. Right and left opposite charge check valves 32 and 33 are fitted into right and left side portions of a vertical middle portion of port block 48, so that charge check valve 32 is interposed between a right end portion of fluid passage 37 and the vertical intermediate portion of fluid passage 26, and charge check valve 33 is interposed between a left end portion of fluid passage 37 and the top portion of fluid passage 22.

As shown in Figs. 3, 4 and 5, a pump shaft hole 48f for passing pump shaft 14 therethrough is formed in an upper half portion of port block 48 above fluid passage 37 and between fluid passages 23 and 26, so as to extend fore-and-aft horizontally and so as to be open on front and rear side surfaces 48d and 48e. As shown in Figs. 3, 4 and 5, a motor shaft hole 48g for passing motor shaft 17 therethrough is formed in a lower half portion of port block 48 below fluid passage 37 and between fluid passages 22 and 26, so as to extend fore-and-aft horizontally and so as to be open on front and rear side surfaces 48d and 48e.

As shown in Fig. 5, left and right kidney ports 64 for hydraulic pump P are formed in port block 48 above fluid passage 37 symmetrically with respect to pump shaft hole 48f when viewed in the axial direction of pump shaft 14. Left kidney port 64 is joined to fluid passage 23 in port block 48, and right kidney port 64 is joined to fluid passage 26 in port block 48. Pump shaft 14 is passed through pump shaft hole 48f, and pump cylinder block 49 fixed on pump shaft 14 is slidably rotatably fitted onto front side surface 48d of port block 48 via a later-discussed pump valve plate 57. Left and right kidney ports 64 are open on front side surface 48d of port block 48 so as to be fluidly connected to the plunger holes in pump cylinder block 49, thereby fluidly connecting fluid passages 23 and 26 to hydraulic pump P.

On the other hand, as shown in Fig. 5, left and right kidney ports 65 for hydraulic motor M3 are formed in port block 48 below fluid passage 37 symmetrically with respect to motor shaft hole 48g when viewed in the axial direction of motor shaft 17. Left kidney port 65 is joined to fluid passage 22 in port block 48, and right kidney port 65 is joined to fluid passage 26 in port block 48. Motor shaft 17 is passed through motor shaft hole 48g, and motor cylinder block 50 fixed on motor shaft 17 is slidably rotatably fitted onto front side surface 48d of port block 48 via a later-discussed motor valve plate 58. Left and right kidney ports 65 are open on front side surface 48d of port block 48 so as to be fluidly connected to the plunger holes in motor cylinder block 50, thereby fluidly connecting fluid passages 22 and 26 to hydraulic motor M.

Therefore, kidney ports 64 serve as suction and delivery ports of hydraulic pump P, and kidney ports 65 serve as suction and delivery ports of hydraulic motor M3. One of kidney ports 65 is fluidly connected to port 24 so as to be fluidly connected to hydraulic pumps M1 and M2 in front transaxle 3, one of kidney ports 64 is fluidly connected to port 25 so as to be fluidly connected to hydraulic pumps M1 and M2 in front transaxle 3, and the other of kidney ports 64 are directly fluidly connected to the other of kidney ports 65 via fluid passage 26 formed in port block 48.

As shown in Figs. 3 an 5, fluid passage 36 is formed in port block 48 so as to extend extended vertically upward from a lateral intermediate portion of fluid passage 37 to pump shaft hole 48f. Fluid passage 31 is formed in port block 48 so as to extend vertically upward from pump shaft hole 48f to port 20 that is open on a top surface of port block 48 to be connected to a pipe or the like serving as fluid passage 30. A bush bearing 14a is fitted in pump shaft hole 48f, and pump shaft 14 is passed through bush bearing 14a, so that bush bearing 14a fluidly tightly separates a bottom portion of fluid passage 31 from a top portion of fluid passage 36. However, fluid in fluid passages 31 and 36 lubricates bush bearing 14a.

As shown in Figs. 3 and 5, fluid passage 36 is bent rearward at an upper portion thereof so as to have a horizontal fluid passage 36a. Fluid passage 36a extends rearward and is formed at a rear end thereof with a kidney-shaped delivery port 36b (see Fig. 6) open on rear side surface 48e so as to serve as the delivery port of charge pump 12. Fluid passage 38a is formed in port block 48 so as to branch rearward from fluid passage 36 below fluid passage 36a. A horizontal fluid passage 70 is formed in port block 48 and is open on front side surface 48d so as to be fluidly connected to fluid sump 68 in HST housing 13. Horizontal fluid passage 70 extends rearward and is joined at a rear end thereof via an orifice 69 to a lower portion of fluid passage 36 lower than fluid passage 38a and above fluid passage 37.

As shown in Figs. 3 and 5, fluid passage 31 has a horizontal fluid passage 31a. Fluid passage 31a branches rearward from a vertical intermediate portion of fluid passage 31 and is formed at a rear end thereof with a kidney-shaped suction port 31b (see Fig. 6) open on rear side surface 48e so as to serve as the suction port of charge pump 12. When viewed in the axial direction of pump shaft 14, kidney-shaped ports 31b and 36b are symmetric with respect to the axis of pump shaft 14.

Further, fluid passage 31 has a horizontal fluid passage 31c, which branches rearward from fluid passage 31 above fluid passage 31a. Fluid passage 31c is open on rear side surface 48e so as to be fluidly connected to fluid passage 38b formed in a pump housing 61 of charge pump 12.

As shown in Figs. 3, 5 and 7, a pump valve plate 57 having a central pump shaft hole 57a is fixed on an upper portion of front side surface 48d of port block 48, and pump cylinder block 49 of hydraulic pump P is slidably rotatably mounted at its rear end surface 49a onto front side surface 48d of port block 48 via pump valve plate 57. Pump shaft 14 is passed through pump cylinder block 49, pump shaft hole 57a in pump valve plate 57 and bush bearing 14a fitted in pump shaft hole 48f in port block 48, so that pump shaft 14 is rotatably integral with pump cylinder block 49 and is allowed to rotate relative to port block 48 and pump valve plate 57.

On the other hand, as shown in Figs. 3, 5 and 7, a motor valve plate 58 having a central motor shaft hole 58a is fixed on a lower portion of front side surface 48d of port block 48, and motor cylinder block 50 of hydraulic motor M3 is slidably rotatably mounted at its rear end surface 50a onto front side surface 48d of port block 48 via motor valve plate 58. Motor shaft 17 is passed through motor cylinder block 50, motor shaft hole 58a in motor valve plate 58, and a bush bearing 17a fitted in motor shaft hole 48g in port block 48, so that motor shaft 17 is rotatably integral with motor cylinder block 50 and is allowed to rotate relative to port block 48 and motor valve plate 58.

Due to the above-mentioned structure, power from engine 15 is transmitted to pump shaft 14 so as to drive hydraulic pump P, whereby plungers 51 reciprocate forward and rearward to deliver fluid from hydraulic pump P. The fluid delivered from hydraulic pump P is supplied to hydraulic motor M3 via valve plates 57 and 58 and fluid passages 22, 23 and 26 in port block 48, whereby plungers 52 reciprocate forward and rearward to rotate hydraulic motor M3. The rotation of hydraulic motor M3 is transmitted from motor shaft 17 to differential unit 41 in rear transaxle 4 so as to drive rear wheels 6. Fluid delivered from hydraulic pump P, before or after supplied to hydraulic motor M3, is supplied to hydraulic motors M1 and M2 so as to drive front wheels 5.

When HST 2 is driven, hydraulic pump P and hydraulic motor M3 have leakage of hydraulic fluid, however, charge pump 12 sucks fluid at suction port 31b from port 20 and fluid passages 31 and 31a, and delivers fluid at delivery port 36b to fluid passages 36a, 36 and 38 so as to supply the fluid to hydraulic circuit 55, thereby compensating for the leakage. Fluid in fluid passage 37 is partly allowed to escape to fluid sump 68 via orifice 69 and fluid passage 70, thereby promoting circulation of fluid in fluid sump 68 so as to improve a heat balance in HST 2. Fluid of fluid sump 68 can overflow to fluid sump 27 in transaxle housing 16 via a pipe (not shown) or the like.

A structure of charge pump 12, including a structure for mounting transaxle housing 16 to charge pump 12, will be described with reference to Figs. 2 to 6. Charge pump 12 is a trochoidal pump that includes an inner rotor 59 and an outer rotor 60. Alternatively, charge pump 12 may be a vane pump, a gear pump or another pump.

As shown in Figs. 2, 3, 4 and 6, charge pump 12 includes a vertical plate-shaped pump housing 61 incorporating inner and outer rotors 59 and 60. Pump housing 61 has a vertical front side surface 61d and a vertical rear side surface 61e. Front side surface 61d abuts against rear side surface 48e of port block 48. Rear side surface 61e abuts against an open front end 16a of transaxle housing 16 of rear transaxle 4.

In this regard, as mentioned above, bolt holes 48b formed in port block 48 coincide to respective bolt holes 61b formed in pump housing 61, and bolts 72 are screwed forward into HST housing 13 via bolt holes 48b and 61b so as to fasten pump housing 61 to HST housing 13 together with port block 48 clamped between HST housing 13 and pump housing 61.

Further, as shown in Figs. 3 and 5, port block 48 is formed therein with bolt holes 48c extending fore-and-aft horizontally so as to be open on front and rear side surfaces 48d and 48e. As shown in Figs. 3, 4 and 6, pump housing 61 is formed therein with bolt holes 61c extending fore-and-aft horizontally so as to be open on front and rear side surfaces 61d and 61g and so as to coincide to respective bolt holes 48c in port block 48. As shown in Fig. 3, bolts 73 are screwed rearward into transaxle housing 16 via respective bolt holes 48c and 61c, thereby fastening port block 48 to transaxle housing 16 together with pump housing 61 clamped between port block 48 and transaxle housing 16.

As shown in Figs. 3 and 6, a pump chamber 61a is recessed in pump housing 61 and is open on an upper portion of front side surface 61d of pump housing 61. Inner rotor 59 and outer rotor 60 are fitted in pump chamber 61a, as shown in Fig. 3. As mentioned above, kidney-shaped suction port 31b formed at the rear end of fluid passage 31a in port block 48 is open on rear side surface 48e so as to face pump chamber 61a in pump housing 61, thereby serving as a suction port for the toroidal pump including inner and outer rotors 59 and 60. Kidney-shaped delivery port 36b formed at the rear end of fluid passage 36a in port block 48 is open on rear side surface 48e so as to face pump chamber 61a in pump housing 61, thereby serving as a delivery port for the toroidal pump including inner and outer rotors 59 and 60.

As shown in Figs. 3, 4 and 6, pump housing 61 is formed therein with upper and lower shaft holes 61f and 61g for passing pump shaft 14 and motor shaft 17 therethrough. Pump shaft hole 61f is provided in the upper half portion of pump housing 61 so as to extend horizontally rearward from pump chamber 61a coaxially to pump shaft hole 48f in port block 48, and is open at a rear end thereof on rear side surface 61e. Pump shaft 14 of hydraulic pump P passed through pump shaft hole 48f in port block 48 projects rearward from rear side surface 48e of port block 48 so as to be passed through pump chamber 61a and pump shaft hole 61f, and projects rearward from rear side surface 61e of pump housing 61 so as to be drivingly connected at a rear end thereof to input shaft 46 of PTO transmission unit 44 via coupling 47 in transaxle housing 16 of rear transaxle 4. As shown in Fig. 3, in pump chamber 61a, inner rotor 59 is fixed on pump shaft 14 so that pump shaft 14 serves as the drive shaft of inner and outer rotors 59 and 60 of charge pump 12.

As shown in Figs. 3, 4 and 6, motor shaft hole 61g is provided in a lower half portion of pump housing 61 below pump shaft hole 61f so as to extend horizontally rearward from front side surface 61d coaxially to motor shaft hole 48g in port block 48, and is open at a rear end thereof on rear side surface 61e. Motor shaft 17 of hydraulic motor M3 passed through motor shaft hole 48g in port block 48 projects rearward from rear side surface 48e of port block 48 so as to be passed through motor shaft hole 61g, and projects rearward from rear side surface 61e of pump housing 61 so as to be drivingly connected at a rear end thereof to input shaft 42 of differential unit 41 via coupling 43 in transaxle housing 16 of rear transaxle 4.

As shown in Figs. 3 and 4, a fluid seal 63 fitted on pump shaft 14 is disposed in a rear end portion of pump shaft hole 61f in pump housing 61 so as to prevent pump chamber 61a and transaxle housing 16 from being fluidly connected to each other via pump shaft hole 61f. As shown in Fig. 3, a fluid seal 63 fitted on motor shaft 17 is disposed in a rear end portion of motor shaft hole 48g in port block 48 so as to prevent HST housing 13 and transaxle housing 16 from being fluidly connected to each other via motor shaft holes 48g and 61g.

When pump shaft 14 is driven by engine 15, inner rotor 59 fixed on pump shaft 14 rotates together with pump shaft 14, and outer rotor 60 rotates following inner rotor 59, so that, as understood from arrows drawn in fluid passages 31 and 36 in Fig. 3, inner and outer rotors 59 and 60 suck fluid from fluid passage 31a into pump chamber 61a via kidney-shaped suction port 31b, pressurize the fluid in pump chamber 61a, and deliver the fluid from pump chamber 61a to fluid passage 36a via kidney-shaped delivery port 36b, thereby supplying the fluid to hydraulic circuit 55, fluidly connecting hydraulic pump P to hydraulic motors M1, M2 and M3, via opened charge check valve 32 or 33.

As shown in Fig. 6, fluid passage 38b is an annular groove formed on front side surface 61g of pump housing 61 so as to surround pump chamber 61a. As shown in Fig. 3, fluid passage 38b is fluidly connected at an upper portion thereof to fluid passage 31c in port block 48, and is fluidly connected at a lower portion thereof to fluid passage 38a in port block 48 via relief valve 39. In this way, relief circuit 74, including relief valve 39 and fluid passages 38a and 38b, is entirely provided in port block 48 and pump housing 61 so as to extend from fluid passage 36 to fluid passage 31 and so as to bypass pump chamber 61a, thereby requiring no additional member for constituting relief circuit 74, and thereby minimizing HST 2.

The advantage of pump housing 61 is that pump housing 61 is expanded downward so as to have motor shaft hole 61g in addition to pump shaft hole 61f, thereby expanding an area of pump housing 61 contacting port block 48 defining a mount part to which transaxle housing 16 (serving as a transmission housing) of rear transaxle 4 is mounted, in comparison with a case where a pump housing has only a pump shaft hole for passing a pump shaft so as to compel a transmission housing to be attached to a portion of a port block having only a motor shaft hole while avoiding interference with the pump housing attached to the port block.

In this regard, more specifically, when viewed in front or rear, as shown in Figs. 4, 5 and 6, bolt holes 48a, 48b and 48c and bolts 71, 72 and 73 are aligned to define an outer peripheral portion of port block 48 surrounding hydraulic pump P and motor M3, and bolt holes 48b, 48c, 61b and 61c and bolts 72 and 73 are aligned to define an outer peripheral portion of pump housing 61 surrounding hydraulic pump P and motor M3.

Especially, the alignment of bolt holes 61c on rear side surface 61e of pump housing 61 define the outer peripheral portion of rear side surface 61e of pump housing 61 abutting against front end 16a of transaxle housing 16 into which bolts 73 are screwed. Therefore, this outer peripheral portion of rear side surface 61e of pump housing 61 serves as a mount part of pump housing 61 onto which transaxle housing 16 is mounted.

An entire area of front side surface 61d of pump housing 61 contacting rear side surface 48e of port block 48 defines an entire area of rear side surface 61e of pump housing 61, and both shaft holes 61f and 61g for passing respective pump and motor shafts 14 and 17 therethrough are disposed in this area defined by front or rear side surface 61d or 61e. Therefore, front end 16a of transaxle housing 16 (serving as a transmission housing) fixed to pump housing 61 is expanded so as to surround both pump shaft 14 and motor shaft 17, thereby increasing variation of arrangement of members in transaxle housing 16, and thereby increasing a rigidity oftransaxle housing 16 so as to reduce vibration and noise, in comparison with a case where a front end of a transmission housing must be fixed to a portion of a port block having only a motor shaft hole while avoiding interference with a pump housing having only a pump shaft hole attached to the port block.

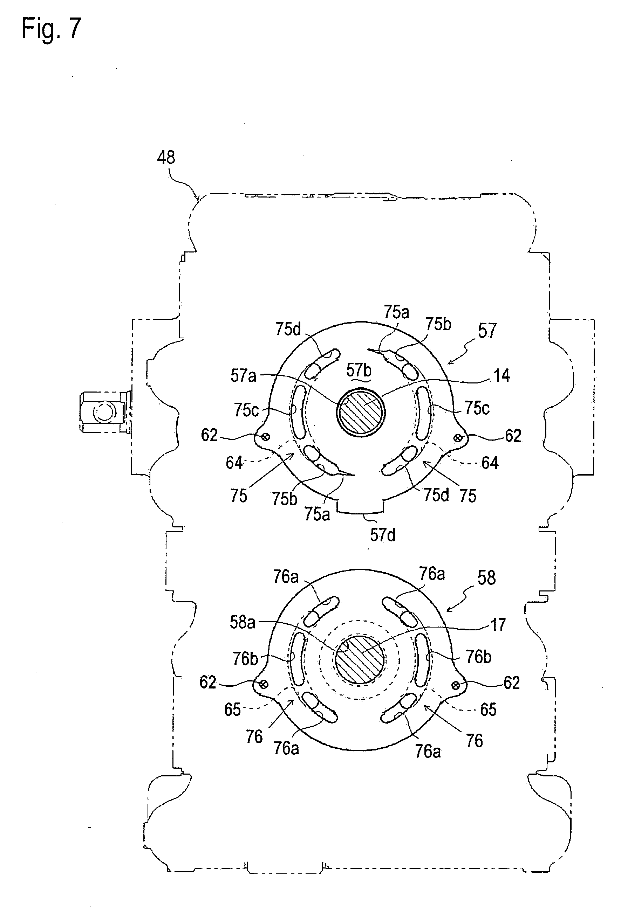

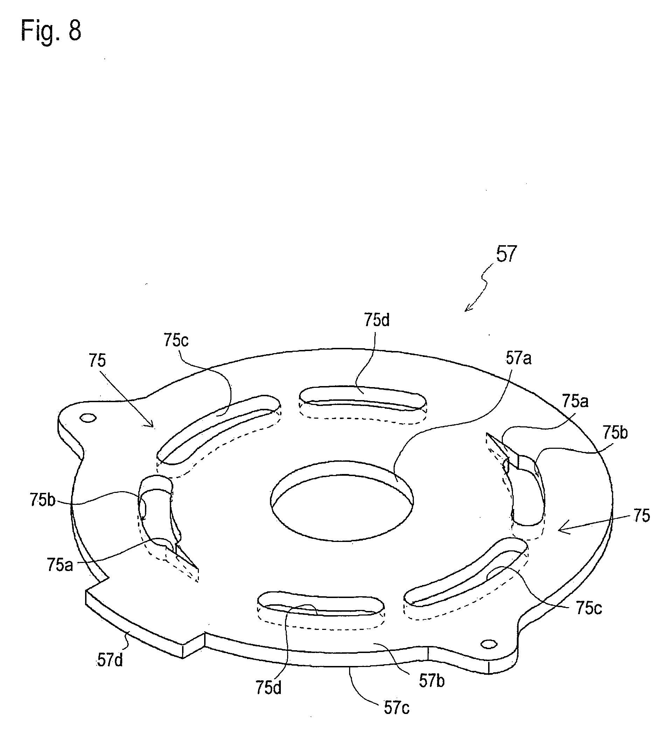

Pump valve plate 57 and motor valve plate 58 will be described in detail with reference to Figs. 3, 5 and 7 to 10. As shown in Figs. 3 and 8, pump valve plate 57 has mutually opposite flat surfaces 57b and 57c. One of surfaces 57b and 57c serves as a front side surface of pump valve plate 57 abutting against rear end surface 49a of pump cylinder block 49. The other of surfaces 57b and 57c serves as a rear side surface of pump valve plate 57 abutting against front side surface 48d of port block 48. Pump valve plate 57 is fixed to port block 48 by pins 62 as shown in Fig. 7.

As shown in Figs. 5 and 7, right and left pump kidney ports 64 are open on front side surface 48d of port block 48 symmetrically with respect to pump shaft hole 48f, and are fluidly connected to respective right and left fluid passages 23 and 26 in port block 48. To correspond to right and left pump kidney ports 64, right and left triple kidney ports 75 are bored through pump valve plate 57, and are open on opposite surfaces 57b and 57c, as shown in Fig. 8. Pump valve plate 57 includes central pump shaft hole 57a as mentioned above, and right and left triple kidney ports 75 are symmetric with respect to pump shaft hole 57a so as to overlap respective right and left kidney ports 64 open on front side surface 48d of port block 48, as shown in Fig. 7.

As shown in Figs. 7 to 9, each triple kidney port 75 includes three arcuate slots 75b, 75c and 75d, which are separated from one another and are aligned in the peripheral direction of pump valve plate 57 so as to face each kidney port 64 and plunger holes in pump cylinder block 49. Upper and lower slots 75b and 75d are symmetric with respect to middle slot 75c so as to extend upward and downward from middle slot 75c in the peripheral direction of pump valve plate 57.

As shown in Fig. 7, when pump valve plate 57 set on port block 48 is viewed in front, middle slot 75c entirely overlaps a middle portion of kidney port 64, and upper and lower slots 75b and 75d overlap upper and lower ends of kidney port 64 so that the upper and lower end portions of kidney port 64 are open at end portions of respective slots 75b and 75d adjacent to slot 75c in the peripheral direction of pump valve plate 57.

As shown in Figs. 7 to 9, each of slots 75b, 75c and 75d is a basic shaped slot having opposite semicircular ends and having a constant radial width between the semicircular ends. Slot 75b is provided with a notch 75a extending in the peripheral direction of pump valve plate 57 from one of the semicircular ends of slot 75b opposite to slot 75c. Notch 75a is taper-shaped when viewed in front so as to reduce its radial width as it goes away from slot 75b. Notches 75a of right and left triple kidney ports 75 are symmetric with respect to pump shaft hole 57a. More specifically, one triple kidney port 75 has upper slot 75d and lower slot 75b with notch 75a, and the other triple kidney port 75 has lower slot 75d and upper slot 75b with notch 75a.

When pump cylinder block 49 fitted on pump valve plate 57 rotates, the plunger holes fitting respective plungers 51 therein rotate on a circular line defined by right and left triple kidney ports 75. In each triple kidney port 75, notch 75a is disposed to be fluidly connected to each plunger hole in rotating pump cylinder block 49 before this plunger hole is fluidly connected to slots 75b, 75c and 75d in this triple kidney port 75. In other words, notch 75a and slots 75b, 75c and 75d are aligned so that each plunger hole in rotating pump cylinder block 49 is fluidly connected to notch 75a, slot 75b, slot 75c and slot 75c one after another in this order.

The passage of each plunger hole along slot 75b defines a start of a fluidal connection of the plunger hole to kidney port 64 via triple kidney port 75. In this regard, at the beginning of the passage of the plunger hole along slot 75b, front side surface 48d of port block 48 blocks in slot 75b so as to limit the fluidal connection degree of the plunger hole to kidney port 64 via triple kidney port 75. When the plunger hole reaches the end portion of slot 75b adjacent to slot 75c where the upper or lower end of kidney port 64 is open, a full fluidal connection of the plunger hole to kidney port 64 via triple kidney port 75 starts.

During passage of each plunger hole along slot 75c, kidney port 64 is fully open to slot 75c from an end of slot 75c adjacent to slot 75b to another end of slot 75c adjacent to slot 75d. Therefore, the full range of passage of each plunger hole along slot 75c defines full fluidal connection of the plunger hole to kidney port 64 via triple kidney port 75.

The passage of each plunger hole along slot 75d defines an end of a fluidal connection of the plunger hole to kidney port 64 via triple kidney port 75. In this regard, at the beginning of the passage of the plunger hole along slot 75d, the upper or lower end of kidney port 64 is open at the end portion of slot 75d adjacent to slot 75c so as to fully connect the plunger hole to kidney port 64. After the plunger hole leaves the end portion of slot 75d where the end of kidney port 64 is open, front side surface 48d of port block 48 blocks in slot 75d so as to limit the fluidal connection degree of the plunger hole to kidney port 64 via triple kidney port 75. Finally, after the plunger hole leaves the end of slot 75d opposite to slot 75c, the plunger hole is completely isolated from kidney ports 64 by surface 57b or 57c of pump valve plate 57.

Therefore, as mentioned above, slots 75b and 75d overlapping the ends of kidney port 64 achieve considerable moderation of fluidal connection of each plunger hole to kidney port 64 when starting and ending the fluidal connection. Further, notches 75a are provided in pump valve plate 57 so as to enhance the effect for moderating starting of plunger holes to kidney ports 64.

In this regard, if slots 75b were not provided with notches 75a, each plunger hole in rotating pump cylinder block 49 would be fully blocked by pump valve plate 57 after it leaves the tail semicircular end of slot 75d of one triple kidney port 75 and until it reaches the leading semicircular end of slot 75b of the other triple kidney port 75. This blocking causes sudden change of fluid flow between each plunger hole and slot 75b as soon as the plunger hole reaches the leading semicircular end of slot 75b. This sudden change of fluid flow causes vibration and noise in HST 2.

Notch 75a is advantageous to cause previous slight fluidal connection of the plunger hole to triple kidney port 75 before the plunger hole reaches the leading semicircular end of slot 75b, thereby moderating change of fluid flow between the plunger holes in pump cylinder block 49 and kidney ports 75 and 64, and thereby reducing vibration and noise in HST 2.

Whether slot 75b with notch 75a is disposed upward or downward from middle slot 75c in each triple kidney port 75 depends on whether surface 57b or surface 57c abuts against front side surface 48d of port block 48, i.e., whether surface 57b or surface 57c serves as the front side surface of pump valve plate 57 set on port block 48. This selection must correspond to whether pump cylinder block 49 rotates clockwise or counterclockwise on pump valve plate 57. The rotational direction of pump cylinder block 49, i.e., the rotational direction of hydraulic pump P, is defined by a rotational direction of engine 15 and a structure of the mechanism drivingly connecting pump shaft 14 to engine 15.

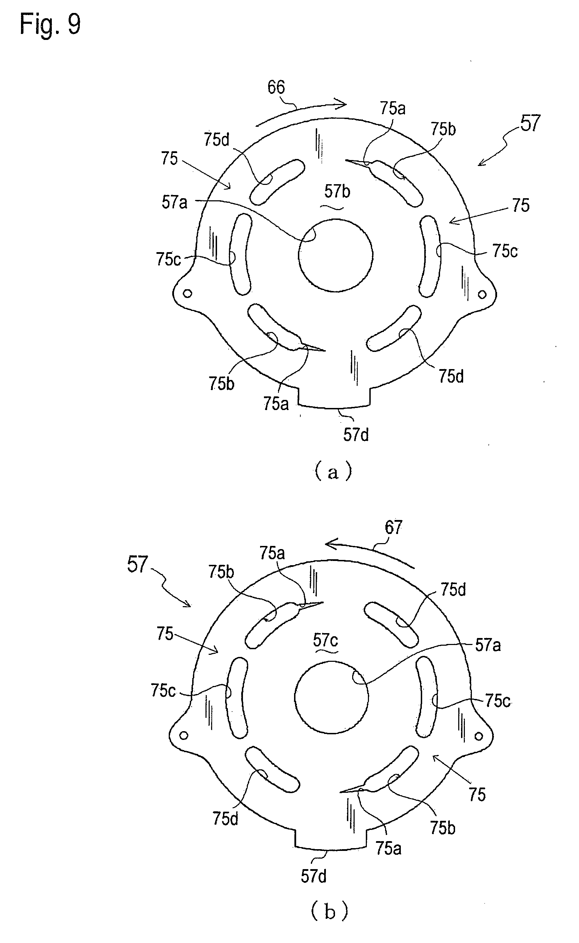

The following description of the arrangement of pump valve plate 57 with reference to Figs. 9(a) and 9(b) will be based on the right and left direction of pump valve plate 57 when viewed in front, i.e., as appearing in Figs. 9(a) and 9(b). Here, it should be noticed that the right and left direction in front view of pump valve plate 57 is opposite to the right and left direction of pump valve plate 57 based on the above-mentioned assumption of HST 2 facing forward in the direction designated by arrow F in Figs. 2 and 3, which rather corresponds to the right and left direction in rear view of pump valve plate 57.

Referring to Fig. 9(a), pump valve plate 57 is disposed to have surface 57b facing forward (i.e., to have surface 57c abutting against front side surface 48d of port block 48) so as to correspond to clockwise rotation of pump cylinder block 49 as designated by an arrow 66. In this state, in front view of pump valve plate 57 having surface 57b forward, left triple kidney port 75 includes lower slot 75b with notch 75a (downward from middle slot 75c) and upper slot 75d (upward from middle slot 75c), and right triple kidney port 75 includes upper slot 75b with notch 75a (upward from middle slot 75c) and lower slot 75d (downward from middle slot 75c).

Referring to Fig. 9(b), pump valve plate 57 is disposed to have surface 57c facing forward (i.e., to have surface 57b abutting against front side surface 48d of port block 48) so as to correspond to counterclockwise rotation of pump cylinder block 49 as designated by an arrow 67. In this state, in front view of pump valve plate 57 having surface 57c forward, left triple kidney port 75 includes upper slot 75b with notch 75a (upward from middle slot 75c) and lower slot 75d (downward from middle slot 75c), and right triple kidney port 75 includes lower slot 75b with notch 75a (downward from middle slot 75c) and upper slot 75d (upward from middle slot 75c).

In this way, pump valve plate 57 is standardized so that common pump valve plate 57 can be set to correspond to the rotational direction of pump cylinder block 49 by only reversing pump valve plate 57 to select whether surface 57b or surface 57c serves as the front surface of pump valve plate 57 abutting against rear end surface 49a of pump cylinder block 49, thereby reducing costs.

In this embodiment, by turning pump valve plate 57 from right to left, pump valve plate 57, which has one surface 57b or 57c serving as the front surface of pump valve plate 57, is reversed so as to have the other surface 57b or 57c serving as the front surface of pump valve plate 57. Alternatively, it may be reversible by turning top to bottom.

To avoid mismatching the rotational direction of pump cylinder block 49 with the selection of whether pump valve plate 57 has surface 57b or 57c forward, pump valve plate 57 is formed with a marker 57d projecting radially from an outer peripheral portion thereof, so that marker 57d can be seen even if pump cylinder block 49 is fitted onto pump valve plate 57 so as to hide right and left triple kidney ports 75 therebehind.

Marker 57d is configured so as to distinguish its opposite surfaces 57b and 57c. For example, one of surfaces 57b and 57c of marker 57d is marked while the other of surfaces 57b and 57c of marker 57d is not marked. In the case where pump cylinder block 49 has been set on port block 48 via pump valve plate 57, an operator can see marker 57d projecting outward from the part of pump valve plate 57 hidden by pump cylinder block 49, and can judge whether surface 57b or surface 57c serves as the front surface of pump valve plate 57 abutting against rear end surface 49a of pump cylinder block 49. Therefore, marker 57d is advantageous to easily judge whether or not the arrangement of pump valve plate 57 is fitted to the rotational direction of pump cylinder block 49, because due to marker 57d, an operator does not have to remove pump cylinder block 49 from pump valve plate 57 for this judgment.

Further, pump valve plate 57 may be configured so as to enable viewing in which direction marker 57d projects e.g., whether marker 57d projects upward or downward, depending on whether surface 57b or surface 57c faces forward.

Further, marker 57d can also serve as an indicator for indicating an abrasion degree of front surface 57b or 57c abutting against rear end surface 49a of pump cylinder block 49. In this regard, after prolonged rotation of pump cylinder block 49, pump valve plate 57 wears thin except for marker 57d so as to have a step between worn front surface 57b or 57c and a front surface of marker 57d. This step indicates the abrasion degree of pump valve plate 57. If the rotational direction of pump cylinder block 49 can be left out of consideration, valve plate 57 may be reversed by tuning right to left and may be set so as to have unworn front surface 57c abutting against rear end surface 49a of pump cylinder block 49 and to have worn rear surface 57b abutting against front side surface 48d of port block 48.

Referring to Fig. 8, pump valve plate 57 is uniformly formed of a material resisting abrasion so as to have surfaces 57b and 57c resisting abrasion, thereby corresponding to whichever surface 57b or 57c may abut against rotating pump cylinder block 49. For example, this material is high strength brass that is an alloy containing a basic element, e.g., copper or zinc, and a special element, e.g., aluminum, iron, manganese or nickel, and is pressed to form pump valve plate 57 with the pair of triple kidney ports 75.

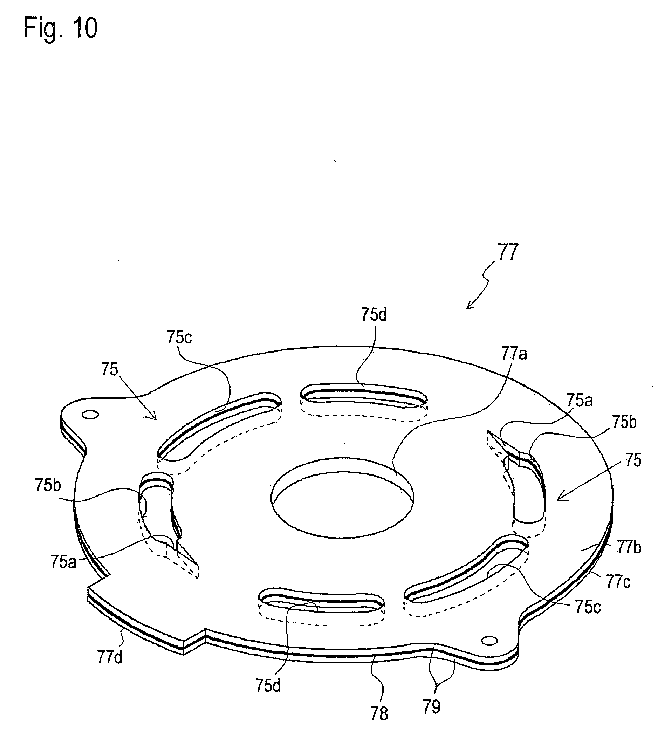

Referring to Fig. 10, an alternative pump valve plate 77 is formed with triple kidney ports 75 similar to those of pump valve plate 57, and is formed with a central pump shaft hole 77a and a marker 77d, similar to pump shaft hole 57a and marker 57d of pump valve plate 57. To provide opposite surfaces 77b and 77c corresponding to surfaces 57b and 57c of pump valve plate 57, pump valve plate 77 is layered so as to have a copper plate 78 clad by opposite two plates 79 whose outer surfaces serve as surfaces 77b and 77c. Plates 79 sandwiching copper plate 78 are made of sintered alloy, e.g., copper-tungsten alloy, which is advantageous in resisting abrasion.

Referring to Figs. 3 and 7, motor valve plate 58 has mutually opposite flat surfaces similar to surfaces 57b and 57c of pump valve plate 57. One of these surfaces serves as a front side surface of motor valve plate 58 abutting against rear end surface 50a of motor cylinder block 50. The other of these surfaces serves as a rear side surface of motor valve plate 58 abutting against front side surface 48d of port block 48. Motor valve plate 58 is fixed to port block 48 by pins 62 so as to be disposed below pump valve plate 57 fixed on port block 48, as shown in Fig. 7.

As shown in Figs. 5 and 7, right and left motor kidney ports 65 are open on front side surface 48d of port block 48 symmetrically with respect to pump shaft hole 48f, and are fluidly connected to respective right and left fluid passages 22 and 26 in port block 48. To correspond to right and left pump kidney ports 64, right and left triple kidney ports 76 are bored through motor valve plate 58, and are open on the opposite flat surfaces. Right and left triple kidney ports 76 are symmetric with respect to motor shaft hole 58a so as to overlap respective right and left kidney ports 65 open on front side surface 48d of port block 48, as shown in Fig. 7.

As shown in Figs. 7 to 9, each triple kidney port 76 includes three arcuate slots 76a and 76b, which are separated from one another and are aligned in the peripheral direction of motor valve plate 58 so as to face each kidney port 65 and plunger holes in motor cylinder block 50. In each triple kidney port 76, upper and lower slots 76a are symmetric with respect to middle slot 76b so as to extend upward and downward from middle slot 76b in the peripheral direction of motor valve plate 58. As shown in Fig. 7, when motor valve plate 58 set on port block 48 is viewed in front, middle slot 76b entirely overlaps a middle portion of kidney port 65, and upper and lower slots 76a overlap upper and lower ends of kidney port 65 so that the upper and lower ends of kidney port 65 are open at respective end portions of respective slots 76a adjacent to slot 76b in the peripheral direction of motor valve plate 58.

As shown in Fig. 7, each of slots 76a and 76b is a basic shaped slot having opposite semicircular ends and having a constant radial width between the semicircular ends. Right and left triple kidney ports 76 correspond to right and left kidney ports 75 of pump valve plate 57, excluding that triple kidney ports 76 include only the basic shaped slots with no notch corresponding to notch 75a of pump valve plate 57. The symmetric arrangement of slots 76a and 76b of right and left triple kidney ports 76 with respect to motor shaft hole 58a corresponds to whether motor cylinder block 50 rotates clockwise or counterclockwise. The rotational direction of motor cylinder block 50, i.e., the rotational direction of hydraulic motor M3, is defined by the slanting direction of movable swash plate 53 of hydraulic pump P controlled to select whether vehicle 1 travels forward or backward.

An alternative HST 2A and a vehicle 1A equipped with HST 2A will be described with reference to Figs. 11 to 13. Description of elements in vehicle 1A and HST 2A designated by the reference numerals used for designating elements in vehicle 1 and HST 2 is omitted because these elements are identical or similar to the elements in vehicle 1 and HST 2 designated by the same reference numerals.

Referring to Fig. 11, in comparison with vehicle 1 shown in Fig. 1, vehicle 1A is equipped with an external hydraulic unit 80 disposed outside HST 2A including a charge pump 12A, so that hydraulic unit 80 is supplied with fluid by charge pump 12A in HST 2A. For example, hydraulic unit 80 is an assembly including a hydraulic actuator and a hydraulic valve for controlling fluid supply to the hydraulic actuator. External fluid passages 81 and 82, e.g., pipes, are interposed between HST 2A and hydraulic unit 80. In this regard, HST 2A has an outlet port 83 and an inlet port 84, and hydraulic unit 80 has a pump port 80a and a tank port 80b. Fluid passage 81 is interposed between ports 80a and 83, and fluid passage 82 is interposed between ports 80b and 84.

Referring to Fig. 11, in comparison with HST 2 shown in Fig. 1, HST 2A includes a fluid passage 131, a charge circuit 56A and a hydraulic PTO circuit 85. Fluid passage 131 is interposed between a suction port of charge pump 12A and port 20 so as to be fluidly connected via port 20 to fluid sump 27 in rear transaxle 4, similarly to fluid passage 31 in HST 2. Charge circuit 56A includes charge check valves 32 and 33 and fluid passage 37 interposed between charge check valves 32 and 33, similar to charge circuit 56 in HST 2. However, charge circuit 56A includes a fluid passage 136 extended from hydraulic PTO circuit 85 to fluid passage 37.

As discussed later, HST 2A includes HST housing 13, an alternative port block 148 and an alternative pump housing 161, so that HST housing 13, port block 148 and pump housing 161 serve as an outer block of HST 2A. This is the meaning of "13, 148, 161" in Fig. 11, similar to "13, 48, 61" in Fig. 1.

Referring to Fig. 11, hydraulic PTO circuit 85 includes fluid passages 85 and 86. Fluid passage 85 is extended from a delivery port of charge pump 12A to outlet port 83. Fluid passage 86 is extended from inlet port 84 to an input port 88a of a relief valve 88, which serves as a pressure regulation valve for regulating hydraulic pressure of fluid supplied to charge check valves 32 and 33. Relief valve 88 releases excessive fluid from its output port 88b to fluid sump 68 in HST 2A. Fluid passage 136 of charge circuit 56A branches from fluid passage 86 upstream of relief valve 88 so as to have fluid whose pressure is regulated by relief valve 88.

Further, hydraulic PTO circuit 85 includes a relief valve 87, which serves as a pressure regulation valve for regulating hydraulic pressure of fluid supplied to hydraulic unit 80. A fluid passage 83a branches from fluid passage 85 to an input port 87a of relief valve 87. Relief valve 87 releases excessive fluid from its output port 87b to fluid passage 86 upstream of a junction of fluid passage 86 to fluid passage 136.

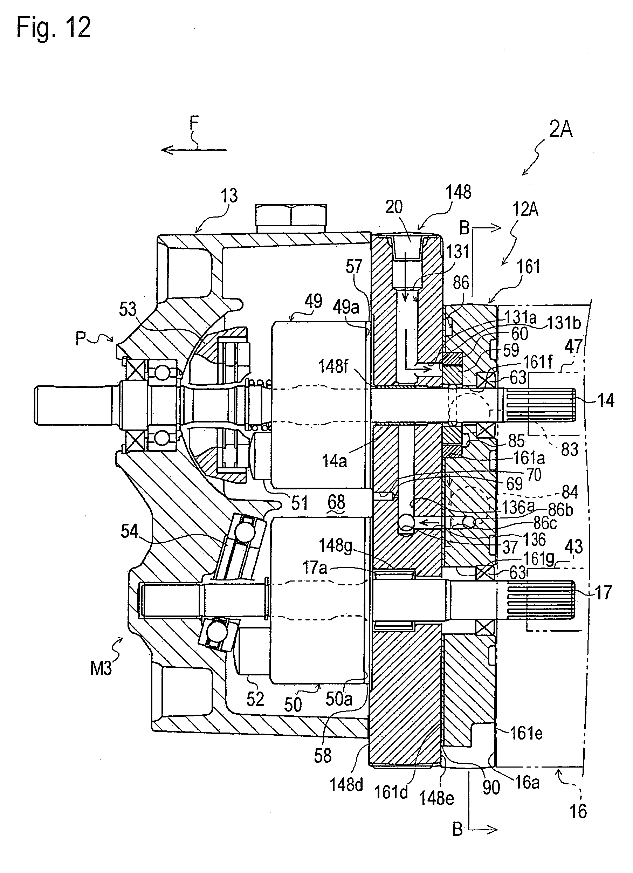

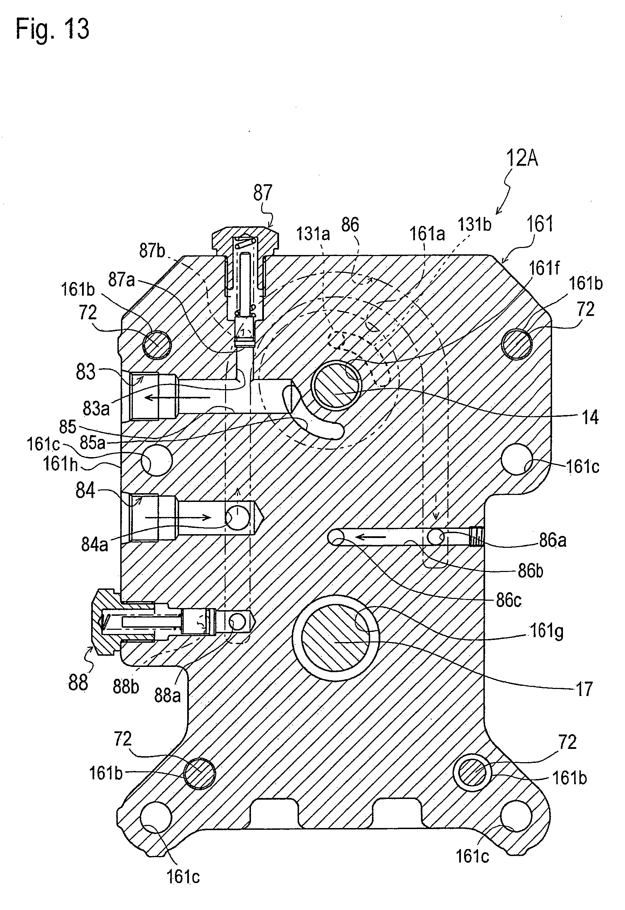

HST 2A including charge pump 12A will be described in detail with reference to Figs. 12 and 13. HST 2A includes port block 148 and pump housing 161. Hydraulic pump P and motor M3 are mounted onto a vertical front side surface 148d of port block 148, and HST housing 13 is joined at its open rear end 13a to front side surface 148d of port block 148 so as to enclose hydraulic pump P and motor M3 mounted on port block 148. Pump housing 161 defining charge pump 12A has a vertical front side surface 161d joined to a vertical rear side surface 148e of port block 148, and has a vertical rear side surface 161e joined to open front end 16a of transaxle housing 16 of rear transaxle 4.

Incidentally, in this embodiment, a packing 90 is interposed between rear side surface 148e of port block 148 and front side surface 161d of pump housing 161 so as to prevent leakage of fluid at a gap between port block 148 and pump housing 161. Alternatively, an O-ring may be interposed between port block 148 and pump housing 161.

In this way, port block 148 and pump housing 161 are clamped between HST housing 13 and transaxle housing 16, similar to port block 48 and pump housing 61 of HST 2. In this regard, port block 148 has bolt holes for passing bolts 71 and 72, similar to those of port block 48, and pump housing 161 has bolt holes 161b and 161c for passing bolts 72 and 73, similar to those of pump housing 61. Therefore, bolts 71 fasten port block 148 to HST housing 13, bolts 72 fasten port block 148 and pump housing 161 to HST housing 13, and bolts 73 fasten port block 148 and pump housing 161 to transaxle housing 16.

HST housing 13 defines fluid sump 68 therein, and port block 148 is provided with fluid passages 22, 23 and 26, ports 20, 24 and 25, charge check valves 32 and 33, orifice 69 and fluid passage 70, similar to port block 48. Shaft holes 148f and 148g for passing pump shaft 14 and motor shaft 17 are formed in port block 148, similar to shaft holes 48f and 48g in port block 48.

To coincide to respective shaft holes 148f and 148g, pump housing 161 is formed therein with an upper pump shaft hole 161f for passing pump shaft 14 and a lower motor shaft hole 161g for passing motor shaft 17. Therefore, pump housing 161 has the same advantage as pump housing 61, that is, pump housing 161 also has an area contacting port block 148 (in this embodiment, via packing 90) so as to have both pump shaft hole 161f and motor shaft hole 161g, thereby ensuring a mount part onto which open front end 16a of transaxle housing 16 is mounted so as to enclose both the rear end of pump shaft 14 and the rear end of motor shaft 17.

Incidentally, fluid seal 63 fitted on pump shaft 14 is provided in pump housing 161 along rear side surface 161e, similar to fluid seal 63 on pump shaft 14 in pump housing 61 of HST 2. On the other hand, in comparison with fluid seal 63 on motor shaft 17 in port block 48 of HST 2, fluid seal 63 fitted on motor shaft 17 in HST 2A is also provided in pump housing 161 along rear side surface 161e, so that no fluid seal needs to be fitted into port block 148. Alternatively, fluid seal 63 on motor shaft 17 may be provided in port block 148 of HST 2A, or fluid seal 63 on motor shaft 17 may be provided in pump housing 61 of HST 2.

Alternative fluid passage 131 is formed in port block 148 so as to extend vertically between port 20 and pump shaft hole 148f. A horizontal fluid passage 131a is extended rearward from a vertical intermediate portion of fluid passage 131, and a kidney-shaped suction port 131b is formed at a rear end of fluid passage 131a, and is open on rear side surface 148e of port block 148 rearward to pump chamber 161a in pump housing 161. In other words, kidney-shaped suction port 131b is formed as a forward expanded portion of pump chamber 161a.

In pump housing 161, a kidney-shaped delivery port 85a is formed so as to be open forward to pump chamber 161a. In other words, kidney-shaped delivery port 85a is formed as a rearward expanded portion of pump chamber 161a. When viewed in the axial direction of pump shaft 14, kidney-shaped ports 131b and 85a are symmetric with respect to the axis of pump shaft 14.

Pump housing 161 has a right or left (in this embodiment, left) outer side surface 161h. Outlet port 83 is provided on outer side surface 161h and is open outward to be connected to fluid passage 81. Fluid passage 85 is formed in pump housing 161 so as to extend laterally horizontally from an end of kidney-shaped delivery port 85a to outlet port 83. Relief valve 87 is fitted into an upper portion of pump housing 161 from a top surface of pump housing 161, and fluid passage 83a is formed in pump housing 161 so as to extend vertically upward from a lateral intermediate portion of fluid passage 85 to input port 87a of relief valve 87.

Inlet port 84 is provided on outer side surface 161h below outlet port 83 and is open outward so as to be connected to fluid passage 82. Further, relief valve 88 is fitted into pump housing 161 from outer side surface 161h below inlet port 84. Accordingly, outlet port 83, inlet port 84 and relief valve 88 are aligned vertically on outer side surface 161h. Such a vertically long outer side surface 161h ensuring the vertical alignment of ports 83 and 84 and relief valve 88 is provided on pump housing 161 because pump housing 161 is vertically expanded to include both shaft holes 161f and 161g for passing pump shaft 14 and motor shaft 17, similarly to pump housing 61 having shaft holes 61f and 61g.

Fluid passage 86 is a groove formed on vertical front side surface 161d of pump housing 161, as shown in Fig. 12. Fluid passage 86 extends in a vertically reversed U-shape when viewed in the axial direction of pump and motor shafts 14 and 17 as shown in Fig. 13. An upper portion of reverse U-shaped fluid passage 86 curves along an upper peripheral surface of pump chamber 161a so as to surround an upper half part of pump chamber 161a, as shown in Fig. 13.

As shown in Fig. 13, in a left half portion of pump housing 161, fluid passage 86 has a left vertical portion extended vertically downward from a left lower end of the curved upper portion of fluid passage 86 surrounding the upper half portion of pump chamber 161a. Inlet port 84 is extended laterally horizontally in pump housing 161 so as to be parallel to fluid passage 85 above inlet port 84. A horizontal fluid passage 84a is formed in pump housing 161 so as to extend fore-and-aft horizontally from an inner end portion of inlet port 84 to the left vertical portion of fluid passage 86 in the left half portion of pump housing 161, thereby fluidly connecting inlet port 84 to fluid passage 86.

As shown in Fig. 13, the left vertical portion of fluid passage 86 in the left half portion of pump housing 161 extends further downward from its junction to fluid passage 84a so as to be fluidly connected at a bottom portion thereof to input port 88a of relief valve 88 below inlet port 84. Relief valve 88 has output port 88b to be fluidly connected to fluid sump 68 in HST housing 13. In this regard, for example, a fluid passage (not shown) is formed in port block 148 so as to open forward from port block 148 to fluid sump 68 in HST housing 13, and this fluid passage in port block 148 is joined at a rear end thereof to output port 88b of relief valve 88 extended forward in pump housing 161, so that relief valve 88 can release excessive fluid to fluid sump 68.

As shown in Figs. 12 and 13, in a right half portion of pump housing 161, fluid passage 86 has a right vertical portion extended vertically downward from a right lower end of the curved upper portion of fluid passage 86 surrounding the upper half portion of pump chamber 161a. A fore-and-aft horizontal fluid passage 86a and a lateral horizontal fluid passage 86b are formed in the right half portion of pump housing 161. Fluid passage 86a is extended from a bottom portion of the right vertical portion of fluid passage 86 in the right half portion of pump housing 161 to fluid passage 86b. Fluid passage 86b has an inner end at a lateral middle portion of pump housing 161 above motor shaft hole 161f, and a fore-and-aft horizontal fluid passage 86c is formed in pump housing 161 so as to extend forward from this inner end of fluid passage 86b.

Fluid passage 136 is formed in port block 148 so as to extend horizontally rearward from a lateral middle portion of horizontal fluid passage 37 between charge check valves 32 and 33 to rear side surface 148e of port block 148 so as to be coaxially connected to fluid passage 86c in pump housing 161, thereby fluidly connecting fluid passage 86 in pump housing 161 to charge check valves 32 and 33 in port block 148.

A fluid passage 136a is formed in port block 148 so as to extend vertically upward from a lateral intermediate portion of fluid passage 37 to pump shaft hole 148f. Fluid passage 79 is formed in port block 148 so as to extend forward from a vertical intermediate portion of fluid passage 136a via orifice 69 and so as to be open on front side surface 148d to fluid sump 68 in HST housing 13, so that fluid discharged from fluid passage 70 promotes circulation of fluid in fluid sump 68, thereby improving heat balance in HST 2A.

Relief valve 87 fitted into pump housing 161 has output port 87b which is formed in pump housing 161 so as to be fluidly connected to fluid passage 86. Therefore, relief valve 87 extracts excessive fluid from fluid flow in fluid passage 85 from kidney-shaped delivery port 85a to outlet port 83, and releases the fluid from output port 87b so that the released fluid joins to fluid flow from inlet port 84 to charge circuit 56A including fluid passage 86 in pump housing 161, fluid passages 136 and 37 in port block 148 and charge check valves 32 and 33. Therefore, relief valve 87 regulates hydraulic pressure of fluid in fluid passage 85 and outlet port 83 supplied to pump port 80a of hydraulic unit 80.

On the other hand, relief valve 88 releases excessive fluid from fluid passage 86 to fluid sump 68 in HST housing 13 as mentioned above, so as to regulate hydraulic pressure of fluid in charge circuit 56 supplied from tank port 80b of hydraulic unit 80 via inlet port 84.

Due to the above-mentioned structure of HST 2A, when power of engine 15 is inputted to pump shaft 14, inner rotor 59 rotates together with pump shaft 14, and outer rotor 60 rotates to follow the rotation of inner rotor 59, so that fluid in fluid passage 131 is absorbed into pump chamber 161a via fluid passage 131a and kidney-shaped suction port 131b. Rotating inner and outer rotors 59 and 60 pressurize fluid in pump chamber 161a, and the pressurized fluid is delivered from kidney-shaped delivery port 85a to outlet port 83 via fluid passage 85 while its pressure is regulated by relief valve 87, and the fluid is supplied from outlet port 83 to pump port 80a of hydraulic unit 80 via external fluid passage 81.

Fluid discharged from tank port 80b of hydraulic unit 80 is supplied to fluid passage 86 in pump housing 161 via external fluid passage 82 and inlet port 84. The fluid in fluid passage 86 is supplied to fluid passages 136 and 37 in port block 148 via fluid passages 86a, 86b and 86c in pump housing 161 while its pressure is regulated by relief valve 88, and the fluid in fluid passage 37 is supplied via opened charge check valve 32 or 33 to hydraulic circuit 55 including hydraulic pump P and motors M1, M2 and M3.

In this way, hydraulic unit 80 is supplied with fluid delivered by charge pump 12A in HST 2A for driving front wheels 5 and rear wheels 6, thereby needing no additional hydraulic pressure source for hydraulic unit 80, and thereby reducing the number of parts and costs. Further, heat is effectively radiated from fluid when flowing in external fluid passages 81 and 82 so as to improve actuation efficiency of HST 2A.

Further, as mentioned above, pump housing 161 is expanded so as to have both shaft holes 161f and 161g. Therefore, pump housing 161 has the expanded rear side surface 161e whose outer peripheral portion serves as the mount part onto which transaxle housing 16 is mounted, and pump housing 161 has a sufficiently large volume for forming inlet and outlet ports 83 and 84 and corresponding fluid passages to be fluidly connected to hydraulic unit 80.

It is further understood by those skilled in the art that the foregoing description is given of preferred embodiments of the disclosed apparatus and that various changes and modifications may be made in the invention without departing from the scope thereof defined by the following claims.

## Claims

1. A hydrostatic stepless transmission (2, 2A) joined to a transmission housing (16), the hydrostatic stepless transmission (2, 2A) comprising:
a hydraulic pump (P);
a hydraulic motor (M3);
a port block (48, 148) including first and second side surfaces (48d, 48e; 148d, 148e) opposite each other, wherein the hydraulic pump (P) and motor (M3) are mounted on the first side surface (48d, 148d) of the port block (48, 148) so as to be fluidly connected to each other via a hydraulic circuit (55) formed in the port block (48, 148); and
a charge pump (12, 12A) including a pump housing (61, 161) mounted to the second side surface (48e, 148e) of the port block (48, 148),
**characterized in that** the pump housing (61, 161) includes a mount part (61e, 161e) to which the transmission housing (16) is mounted.

2. The hydrostatic stepless transmission (2, 2A) according to claim 1, wherein the hydraulic pump (P) has a pump shaft (14) projecting outward from the second side surface (48e, 148e) of the port block (48, 148), wherein the hydraulic motor (M3) has a motor shaft (17) projecting outward from the second side surface (48e, 148e) of the port block (48, 148), wherein the pump housing includes respective shaft holes (48f, 48g; 148f, 148g) through which the pump shaft (14) and the motor shaft (17) projecting outward from the second side surface (48e, 148e) of the port block (48, 148) are passed, wherein the pump housing (61, 161) has an area contacting the second side surface (48e, 148e) of the port block (48, 148) so as to define the mount part (61 e, 161 e), and wherein the shaft holes (48f, 48g; 148f, 148g) are disposed in the area.

3. The hydrostatic stepless transmission (2A) according to claim 1, wherein the pump housing (161) has an outlet port (83) for discharging fluid delivered from the charge pump (12A) to outside of the pump housing (161), and an inlet port (84) for introducing fluid from outside of the pump housing (161) to the hydraulic circuit (55) in the port block (148).

## Patentansprüche

1. Hydrostatisches stufenloses Getriebe (2, 2A), das mit einem Getriebegehäuse (16) zusammengefügt ist, wobei das hydrostatische stufenlose Getriebe (2, 2A) umfasst:
eine Hydraulikpumpe (P);
einen Hydraulikmotor (M3);
einen Anschlussblock (48, 148), der erste und zweite Seitenflächen (48d, 48e; 148d, 148e) enthält, die einander gegenüberliegen, wobei die Hydraulikpumpe (P) und der Motor (M3) in der Weise auf der ersten Seitenfläche (48d, 148d) des Anschlussblocks (48, 148) angebracht sind, dass sie über einen in dem Anschlussblock (48, 148) gebildeten Hydraulikkreis (55) fluidtechnisch miteinander verbunden sind; und
eine Ladepumpe (12, 12A), die ein auf der zweiten Seitenfläche (48e, 148e) des Anschlussblocks (48, 148) angebrachtes Pumpengehäuse (61, 161) enthält,
**dadurch gekennzeichnet, dass** das Pumpengehäuse (61, 161) ein Befestigungsteil (61e, 161e) enthält, an dem das Getriebegehäuse (16) angebracht ist.

2. Hydrostatisches stufenloses Getriebe (2, 2A) nach Anspruch 1, wobei die Hydraulikpumpe (P) eine Pumpenwelle (14) aufweist, die von der zweiten Seitenfläche (48e, 148e) des Anschlussblocks (48, 148) nach außen vorsteht, wobei der Hydraulikmotor (M3) eine Motorwelle (17) aufweist, die von der zweiten Seitenfläche (48e, 148e) des Anschlussblocks (48, 148) nach außen vorsteht, wobei das Pumpengehäuse jeweilige Wellenbohrungen (48f, 48g; 148f, 148g) enthält, durch die die Pumpenwelle (14) und die Motorwelle (17), die von der zweiten Seitenfläche (48e, 148e) des Anschlussblocks (48, 148) nach außen vorstehen, verlaufen, wobei das Pumpengehäuse (61, 161) eine Fläche aufweist, die die zweite Seitenfläche (48e, 148e) des Anschlussblocks (48, 148) berührt, um das Befestigungsteil (61e, 161e) zu definieren, und wobei die Wellenbohrungen (48f, 48g; 148f, 148g) in der Fläche angeordnet sind.

3. Hydrostatisches stufenloses Getriebe (2A) nach Anspruch 1, wobei das Pumpengehäuse (161) einen Auslassanschluss (83) zum Entleeren von von der Ladepumpe (12A) gefördertem Fluid aus dem Pumpengehäuse (161) heraus und einen Einlassanschluss (84) zum Einleiten von Fluid von außerhalb des Pumpengehäuses (161) in den Hydraulikkreis (55) in dem Anschlussblock (148) hinein aufweist.

## Revendications

1. Transmission hydrostatique à variation continue (2, 2A) reliée à un carter de transmission (16), la transmission hydrostatique à variation continue (2, 2A) comprenant :
une pompe hydraulique (P) ;
un moteur hydraulique (M3) ;
un bloc d'orifices (48, 148) incluant des première et seconde surfaces latérales (48d, 48e ; 148d, 148e) opposées l'une à l'autre, dans laquelle les pompe (P) et moteur (M3) hydrauliques sont montés sur la première surface latérale (48d, 148d) du bloc d'orifices (48, 148) de manière à être connectés par voie fluidique l'un à l'autre par le biais d'un circuit hydraulique (55) formé dans le bloc d'orifices (48, 148) ; et
une pompe de charge (12, 12A) incluant un carter de pompe (61, 161) monté sur la seconde surface latérale (48e, 148e) du bloc d'orifices (48, 148),
**caractérisée en ce que** le carter de pompe (61, 161) inclut une partie de monture (61e, 161e) à laquelle le carter de transmission (16) est monté.

2. Transmission hydrostatique à variation continue (2, 2A) selon la revendication 1, dans laquelle la pompe hydraulique (P) a un arbre de pompe (14) faisant saillie vers l'extérieur depuis la seconde surface latérale (48e, 148e) du bloc d'orifices (48, 148), dans laquelle le moteur hydraulique (M3) a un arbre de moteur (17) faisant saillie vers l'extérieur depuis la seconde surface latérale (48e, 148e) du bloc d'orifices (48, 148), dans laquelle le carter de pompe inclut des orifices d'arbre respectifs (48f, 48g ; 148f, 148g) à travers lesquels l'arbre de pompe (14) et l'arbre de moteur (17) faisant saillie vers l'extérieur depuis la seconde surface latérale (48e, 148e) du bloc d'orifices (48, 148) sont passés, dans laquelle le carter de pompe (61, 161) possède une zone venant en contact avec la seconde surface latérale (48e, 148e) du bloc d'orifices (48, 148) de manière à définir la partie de monture (6 1 e, 161e), et dans laquelle les orifices d'arbre (48f, 48g ; 148f, 148g) sont disposés dans la zone.

3. Transmission hydrostatique à variation continue (2A) selon la revendication 1, dans laquelle le carter de pompe (161) a un orifice de sortie (83) pour évacuer du fluide fourni de la pompe de charge (12A) à l'extérieur du carter de pompe (161) et un orifice d'entrée (84) pour introduire du fluide de l'extérieur du carter de pompe (161) au circuit hydraulique (55) dans le bloc d'orifices (148).
